# EUROPÄISCHE PATENTSCHRIFT

(11) **EP 2 673 224 B1**
(45) Veröffentlichungstag und Bekanntmachung des Hinweises auf die Patenterteilung: **14.01.2015**
(21) Anmeldenummer: 12702827.2
(22) Anmeldetag: 07.02.2012
(51) Int. Cl.: B65G 54/02

(54) **TRANSPORTVORRICHTUNG MIT ERKENNUNGSFUNKTION**
TRANSPORT DEVICE WITH IDENTIFICATION FUNCTION
DISPOSITIF DE TRANSPORT À FONCTION DE RECONNAISSANCE

(30) Priorität: 07.02.2011 DE 102011003682
(43) Veröffentlichungstag der Anmeldung: 18.12.2013
(73) Patentinhaber: Robert Bosch GmbH, 70442 Stuttgart (DE)
(72) Erfinder: REINISCH, Martin, 73733 Esslingen (DE); VAN DE LOECHT, Heinrich, 76461 Muggensturm (DE)
(86) Internationale Anmeldenummer: PCT/EP2012/052019
(87) Internationale Veröffentlichungsnummer: WO 2012/107431

(56) Entgegenhaltungen:
- EP-A1- 0 881 170
- US-A1- 2003 136 086
- US-A1- 2003 230 941
- US-A1- 2005 256 774
- US-B1- 6 191 507
- US-B1- 6 876 896

## Beschreibung

### Stand der Technik

Die vorliegende Erfindung betrifft eine Transportvorrichtung zum Transport von Produkten, insbesondere zur Beschickung von Verpackungsmaschinen, bei der eine Erkennung und Verfolgung von Läufern möglich ist.

Aus der DE 102009002606 A1 ist eine umlaufende Transportvorrichtung bekannt, welche ein verbessertes Antriebskonzept aufweist. Diese bekannte Transportvorrichtung umfasst eine umlaufende Transportstrecke, wenigstens einen Läufer und einen elektromagnetischen Antrieb mit einer Vielzahl von ortsfesten Spulenelementen und einen am Läufer angeordneten Permanentmagnet. Wenn bei derartigen Transportvorrichtungen eine relativ lange Transportstrecke vorhanden ist, auf der eine Vielzahl von Läufern bewegt wird, kann eine Überwachung der Läufer schwierig sein. Zur Steuerung des elektromagnetischen Antriebs ist es jedoch notwendig zu wissen, wo sich der jeweilige Läufer befindet. Auch ist eine Verfolgung eines Läufers und damit des durch ihn transportierten Produkts über die gesamte Transferstrecke wünschenswert. Ein derartiges System sollte jedoch möglichst einfach und sicher sein.

Weiterhin sind aus der US 6876896 B1 und der US 2003/0230941 A1 Transportvorrichtungen gemäß dem Oberbegriff des Anspruchs 1 bekannt.

### Offenbarung der Erfindung

Bei der Transportvorrichtung mit den Merkmalen des Anspruchs 1 ist eine einfache und kostengünstige Erkennung von Läufern auf einer Transferstrecke möglich. Insbesondere können zur Erkennung der Läufer dabei rein passive Elemente ohne Energieversorgung auf den Läufern verwendet werden. Die

### Neue Beschreibungsseite 2 (Reinschrift)

Erkennungsvorrichtung ist dabei unanfällig gegenüber Verschmutzung und es sind auch höhere Geschwindigkeiten von größer als 4 m/s möglich. Darüber hinaus ist die Erkennungsvorrichtung verschleißfrei. Dies wird dadurch erreicht, dass die Erkennungsvorrichtung wenigstens einen ortsfest an der Transferstrecke angeordneten Sensor und eine individuelle Markierungseinrichtung umfasst, welche vom Sensor erfassbar ist. Die Markierungseinrichtung ist dabei jeweils an einem Läufer angeordnet und individuell ausgestaltet. Somit können alle Läufer auf der Transferstrecke jederzeit eindeutig erkannt werden, wodurch auch eine Nachverfolgung des transportierten Produkts möglich ist.

Die erfindungsgemäße Transportvorrichtung wird dadurch gekennzeichnet, dass jeder Läufer wenigstens zwei unterschiedliche individuelle Markierungseinrichtungen aufweist. Hierdurch kann eine Redundanz für eine sichere Erfassung bereitgestellt werden.

Die Unteransprüche zeigen bevorzugte Weiterbildungen der Erfindung.

Vorzugsweise ist eine Vielzahl von Sensoren an der Transferstrecke angeordnet. Besonders bevorzugt weisen die Sensoren dabei jeweils zueinander gleiche Abstände auf. Hierdurch kann eine mehrfache Erfassung des Läufers ermöglicht werden. Durch die Vielzahl der erhobenen Daten ist ferner auch eine sehr genaue Positionsbestimmung der Läufer möglich.

Weiter bevorzugt umfasst die Transportvorrichtung eine Positionserfassungsvorrichtung zur Erfassung einer Position eines Läufers auf der Transferstrecke. Besonders bevorzugt ist die Positionserfassungsvorrichtung mit der erfindungsgemäßen Erkennungsvorrichtung verbunden, so dass nicht nur erfasst werden kann, an welchen Positionen sich Läufer befinden, sondern exakt bestimmt werden kann, an welcher Position sich welcher Läufer befindet, insbesondere, wenn sich die Läufer zwischen zwei Sensoren befinden.

Gemäß einem bevorzugten Ausführungsbeispiel der Erfindung umfasst die Erkennungsvorrichtung als Sensor einen RFID-Sensor und die Markierungseinrichtung ist ein RFID-Element. Hierdurch kann eine besonders kostengünstige Erkennungsvorrichtung bereitgestellt werden.

Vorzugsweise ist die Markierungseinrichtung derart ausgebildet, dass zusätzliche weitere optionale Daten gespeichert und/oder geändert und/oder gelöscht und/oder ausgelesen werden können.

Gemäß einer alternativen Ausgestaltung der Erfindung ist der Sensor der Erkennungsvorrichtung ein Hall-Sensor und die individuelle Markierungseinrichtung ist ein Permanentmagnet. Diese erfindungsgemäße Erkennungsvorrichtung kann ebenfalls sehr einfach und kostengünstig bereitgestellt werden.

Gemäß einer noch weiteren bevorzugten Alternative der Erfindung ist der Sensor der Erkennungseinrichtung ein Inkrementalgeber-Sensor und die individuelle Markierungseinrichtung umfasst mehrere Magnetstreifen von Permanentmagneten.

Bei den Erkennungseinrichtungen, welche als individuelle Markierungseinrichtungen Permanentmagnete verwenden, sei angemerkt, dass die Permanentmagnete zur Unterscheidung vorzugsweise unterschiedliche Magnetstärken und/oder unterschiedliche Polungen aufweisen. Hierdurch kann jeweils eine individuelle Kennzeichnung jedes Läufers ermöglicht werden.

Besonders bevorzugt wird ein Signal des Inkrementalgeber-Sensors auch der Positionserfassungsvorrichtung zugeführt. Da eine Erkennungsvorrichtung mit einem Inkrementalgeber-Sensor und Magnetstreifen auch ein sehr genaues Wegmesssystem mit einer Genauigkeit bis zu 10 µm darstellt, kann diese Information auch gezielt zur Bestimmung der exakten Position des Läufers verwendet werden. Hierdurch kann beispielsweise ein bereits vorhandenes Positionserfassungssystem noch genauer werden.

Gemäß einer weiteren bevorzugten Ausgestaltung der Erfindung umfasst die erfindungsgemäße Erkennungseinrichtung einen Barcode-Leser als Sensor und ein Barcode-Element als individuelle Markierungseinrichtung. Auch diese Erkennungseinrichtung kann besonders einfach und kostengünstig bereitgestellt werden.

Die Erfindung wird bevorzugt auf umlaufend geschlossenen Transferstrecken verwendet. Die Streckenführung der Transferstrecken kann dabei beliebig sein, d.h., gerade und kurvige Abschnitte in beliebiger Anordnung umfassen. Besonders bevorzugt wird die Transportvorrichtung der Erfindung in Verbindung mit einer Beschickung von Verpackungsmaschinen verwendet.

### Zeichnung

Nachfolgend wird unter Bezugnahme auf die begleitende Zeichnung ein Ausführungsbeispiel der Erfindung im Detail beschrieben. In der Zeichnung ist:

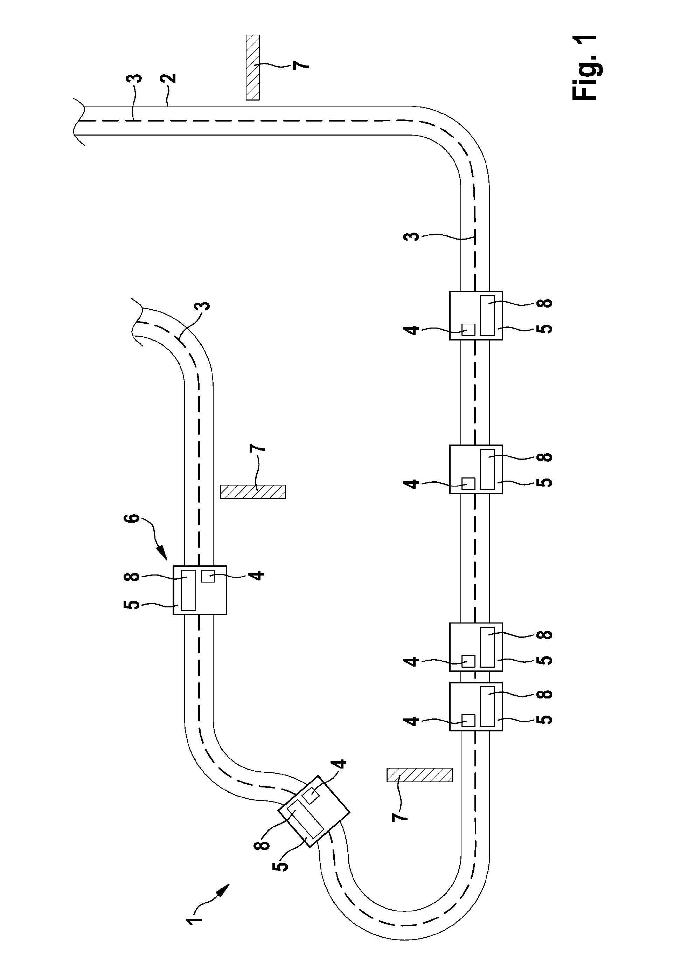

- Figur 1: eine schematische Darstellung einer Transportvorrichtung gemäß einem bevorzugten Ausführungsbeispiel der Erfindung.

### Ausführungsform der Erfindung

Wie aus Figur 1 ersichtlich ist, umfasst die Transportvorrichtung 1 eine Transferstrecke 2 und einen elektromagnetischen Antrieb. Der elektromagnetische Antrieb umfasst eine Vielzahl von ortsfesten Spulenelementen 3, welche an der Transferstrecke 2 angeordnet sind, und eine Vielzahl von Permanentmagneten 4, wobei jeweils ein Permanentmagnet 4 an einem Läufer 5 angeordnet ist. Dabei können die einzelnen Spulenelemente 3 jeweils individuell voneinander angesteuert und bestromt werden, um die Läufer 5 entlang der Transferstrecke 2 zu bewegen. Die Transferstrecke 2 kann dabei linienförmig oder umlaufend geschlossen sein.

Die Transportvorrichtung 1 umfasst ferner eine individuelle Erkennungseinrichtung 6, welche eine Vielzahl von ortsfesten Sensoren 7 und eine Vielzahl von individuellen Markierungseinrichtungen 8 umfasst. Die Erkennungseinrichtung 6 kann dabei unterschiedlichen Sensoren 7 und Markierungseinrichtungen 8 umfassen, beispielsweise RFID-Sensoren und RFID-Elemente, Hall-Sensoren und Permanentmagnete, Inkrementalgeber-Sensoren und Magnetstreifen, oder Barcode-Sensoren und Barcode-Elemente. Allen erfindungsgemäßen Sensoren und Markierungseinrichtungen ist dabei gemeinsam, dass eine hardwarebasierte Lösung der Erkennung realisiert ist. Hierbei werden an den Läufern 5 rein passive Elemente verwendet, welche keine Energieversorgung benötigen, so dass die Läufer einfach und kostengünstig aufgebaut sind.

Insbesondere bei der Verwendung von RFID-Sensoren und RFID-Elementen können neben der Erfassung der individuellen Markierung auch die RFID-Elemente auf den Läufern 5 während des Vorbeibewegens aktiv beschrieben und nicht nur ausgelesen werden. Auch wäre eine Speicherung eines weiteren Merkmals auf dem RFID-Element möglich. Beispielsweise könnte nicht nur die Läufer-Identifikation auf dem RFID-Element vorhanden sein, sondern ebenfalls ein weiteres Datum, welches beispielsweise für die Produktion auf dem RFID-Element gespeichert und an anderer Stelle ausgelesen und/oder abgeändert werden kann.

Auch ist es erfindungsgemäß möglich, beispielsweise fehlerhafte Läufer 5 zu erfassen und schon vor einem eventuell auftretenden Fehler vorbeugend auszutauschen. Hierbei werden die Läufer 5 alle mit einem exakt gleichen Bewegungsprofil über eine definierte Messstrecke bewegt. In der Steuereinheit ist ein bestimmtes Profil für eine Bestromung des elektromagnetischen Antriebs hinterlegt, welches beispielsweise bei einer Inbetriebnahme ermittelt und abgespeichert wurde. Durch einen kontinuierlichen Vergleich des hinterlegten Profils mit den aktuell gemessenen Stromwerten in definierten Zeitintervallen können Rückschlüsse darauf gezogen werden, ob ein Läufer 5 einen erhöhten Strombedarf aufweist. Dies könnte beispielsweise auf ein mechanisches Problem, z.B. eine verschlissene Läuferführung, hindeuten. Erfindungsgemäß kann nun dieser Läufer 5 eindeutig bestimmt werden und gegebenenfalls ersetzt werden.

Auch kann beispielsweise nach einem kompletten Abschalten der Transportvorrichtung eine möglicherweise notwendig Referenzfahrt der Läufer 5 in Kombination mit einem Positionserfassungssystem, welches Positionen der Läufer auf der Transferstrecke 2 erfasst, abgekürzt werden. Wenn beispielsweise nach einem Wiedereinschalten das Positionserfassungssystem noch dieselben Positionen der Läufer 5 meldet wie vor dem Ausschalten, kann angenommen werden, dass die Läufer zwischenzeitlich nicht manuell verschoben wurden. Dies kann nun erfindungsgemäß noch zusätzlich verifiziert werden, indem ein kurzer Referenzlauf ausgeführt wird, nämlich so lange, bis ein Läufer 5 von einem der Sensoren 7 detektiert wird und eindeutig identifiziert wird. Stimmt nun die detektierte Identifikation des Läufers 5 noch mit der vor dem Ausschalten des Systems gespeicherten Identifikation an dieser Position überein, kann die Referenzfahrt beendet werden und in der Transportvorrichtung herrschen eindeutige Verhältnisse. Stimmt die detektierte Identifikation jedoch nicht mit der vor dem Ausschalten gespeicherten Identifikation überein, bedeutet dies, dass während des ausgeschaltet Zustands ein oder mehrere Läufer 5 von Hand verschoben wurden. Hier ist dann eine längere Referenzfahrt notwendig, bis alle Läufer eindeutig identifiziert sind.

## Patentansprüche

1. Transportvorrichtung zum Transport von Produkten, insbesondere zur Beschickung von Verpackungsmaschinen, umfassend:
- eine Transferstrecke (2),
- einen elektromagnetischen Antrieb mit einer Vielzahl von Spulenelementen (3) und einer Vielzahl von Permanentmagneten (4), wobei die Spulenelemente (3) ortsfest an der Transferstrecke (2) angeordnet sind,
- eine Vielzahl von Läufern (5), welche verfahrbar an der Transferstrecke (2) angeordnet sind, wobei wenigstens jeweils ein Permanentmagnet (4) des elektromagnetischen Antriebs an einem Läufer (5) angeordnet ist,
- wenigstens einen Sensor (7), welcher ortsfest an der Transferstrecke (2) angeordnet ist, und
- individuelle Markierungseinrichtungen (8), welche mittels des Sensors erfassbar sind und welche zueinander jeweils unterschiedlich sind,
- wobei jeweils wenigstens einer der Markierungseinrichtungen (8) an einem Läufer (5) angeordnet ist,
**dadurch gekennzeichnet, dass**
- jeder Läufer (5) wenigstens zwei unterschiedliche, individuelle Markierungseinrichtungen (8) umfasst.

2. Vorrichtung nach Anspruch 1, **dadurch gekennzeichnet, dass** die Vorrichtung eine Vielzahl von Sensoren (7) umfasst.

3. Vorrichtung nach einem der vorhergehenden Ansprüche, ferner umfassend eine Positionserfassungsvorrichtung, um eine Position der Läufer (5) auf der Transferstrecke (2) zu erfassen.

4. Vorrichtung nach einem der vorhergehenden Ansprüche, **dadurch gekennzeichnet, dass** die individuelle Markierungseinreichung (8) derart ausgebildet ist, dass zusätzliche Daten und/oder Informationen speicherbar und/oder änderbar und/oder löschbar und/oder auslesbar sind.

5. Vorrichtung nach einem der vorhergehenden Ansprüche, **dadurch gekennzeichnet, dass** der Sensor (7) ein RFID-Sensor ist und eine der Markierungseinrichtungen (8) ein RFID-Element ist.

6. Vorrichtung nach einem der Ansprüche 1 bis 5, **dadurch gekennzeichnet, dass** der Sensor (7) ein Hall-Sensor ist und eine der Markierungseinrichtungen (8) ein Permanentmagnet ist.

7. Vorrichtung nach einem der Ansprüche 1 bis 6, **dadurch gekennzeichnet, dass** der Sensor (7) ein Inkrementalgeber-Sensor ist und eine der Markierungseinrichtungen (8) streifenartige Permanentmagnete umfasst.

8. Vorrichtung nach Anspruch 6 oder 7, **dadurch gekennzeichnet, dass** die Permanentmagnete unterschiedliche Magnetstärken und/oder unterschiedliche Polungen aufweisen.

9. Vorrichtung nach einem der Ansprüche 1 bis 8, **dadurch gekennzeichnet, dass** der Sensor (7) ein Barcode-Leser ist und eine der Markierungseinrichtungen (8) ein Barcode-Element, insbesondere ein Aufdruck oder ein Aufkleber, ist.

## Claims

1. Transport device for transporting products, in particular for feeding packaging machines, comprising:
- a transfer section (2),
- an electromagnetic drive with a multiplicity of coil elements (3) and a multiplicity of permanent magnets (4), wherein the coil elements (3) are arranged in a stationary manner on the transfer section (2),
- a multiplicity of rotors (5), which are arranged movably on the transfer section (2), wherein at least in each case one permanent magnet (4) of the electromagnetic drive is arranged on a rotor (5),
- at least one sensor (7), which is arranged in a stationary manner on the transfer section (2), and
- individual marking devices (8), which can be detected by means of the sensor and which are in each case different from one another,
- wherein in each case at least one of the marking devices (8) is arranged on a rotor (5),
**characterized in that**
- each rotor (5) comprises at least two different, individual marking devices (8).

2. Device according to Claim 1, **characterized in that** the device comprises a multiplicity of sensors (7).

3. Device according to one of the preceding claims, further comprising a position detection device, in order to detect a position of the rotors (5) on the transfer section (2).

4. Device according to one of the preceding claims, **characterized in that** the individual marking device (8) is designed such that additional data and/or information can be stored and/or can be amended and/or can be deleted and/or can be read out.

5. Device according to one of the preceding claims, **characterized in that** the sensor (7) is an RFID sensor and one of the marking devices (8) is an RFID element.

6. Device according to one of Claims 1 to 5, **characterized in that** the sensor (7) is a Hall sensor and one of the marking devices (8) is a permanent magnet.

7. Device according to one of Claims 1 to 6, **characterized in that** the sensor (7) is an incremental encoder sensor and one of the marking devices (8) comprises strip-like permanent magnets.

8. Device according to Claim 6 or 7, **characterized in that** the permanent magnets have different magnetic strengths and/or different polarities.

9. Device according to one of Claims 1 to 8, **characterized in that** the sensor (7) is a barcode reader and one of the marking devices (8) is a barcode element, in particular an imprint or a sticker.

## Revendications

1. Dispositif de transport pour le transport de produits, en particulier pour leur chargement sur des machines d'emballage, comprenant :
- une section de transfert (2),
- un entraînement électromagnétique comprenant une pluralité d'éléments de bobine (3) et une pluralité d'aimants permanents (4), les éléments de bobine (3) étant disposés fixement sur la section de transfert (2),
- une pluralité de rotors (5) qui sont disposés de manière déplaçable sur la section de transfert (2), au moins à chaque fois un aimant permanent (4) de l'entraînement électromagnétique étant disposé sur un rotor (5),
- au moins un capteur (7) qui est disposé fixement sur la section de transfert (2), et
- des dispositifs de marquage individuels (8) qui peuvent être détectés au moyen du capteur et qui sont à chaque foie différents les uns des autres,
- au moins à chaque fois l'un des dispositifs de marquage (8) étant disposé sur un rotor (5),
**caractérisé en ce que**
- chaque rotor (5) comprend au moins deux dispositifs de marquage individuels différents (8).

2. Dispositif selon la revendication 1, **caractérisé en ce que** le dispositif comprend une pluralité de capteurs (7).

3. Dispositif selon l'une quelconque des revendications précédentes, comprenant en outre un dispositif de détection de position afin de détecter une position des rotors (5) sur la section de transfert (2).

4. Dispositif selon l'une quelconque des revendications précédentes, **caractérisé en ce que** le dispositif de marquage individuel (8) est réalisé de telle sorte que des données supplémentaires et/ou des informations supplémentaires puissent être mémorisées et/ou modifiées et/ou effacées et/ou lues.

5. Dispositif selon l'une quelconque des revendications précédentes, **caractérisé en ce que** le capteur (7) est un capteur RFID et l'un des dispositifs de marquage (8) est un élément RFID.

6. Dispositif selon l'une quelconque des revendications 1 à 5, **caractérisé en ce que** le capteur (7) est un capteur de Hall et l'un des dispositifs de marquage (8) est un aimant permanent.

7. Dispositif selon l'une quelconque des revendications 1 à 6, **caractérisé en ce que** le capteur (7) est un capteur à codeur incrémental et l'un des dispositifs de marquage (8) comprend des aimants permanents de type en bande.

8. Dispositif selon la revendication 6 ou 7, **caractérisé en ce que** les aimants permanents présentent différentes intensités magnétiques et/ou différentes polarités.

9. Dispositif selon l'une quelconque des revendications 1 à 8, **caractérisé en ce que** le capteur (7) est un lecteur de codes à barres et l'un des dispositifs de marquage (8) est un élément de code à barres, en particulier une impression ou un autocollant.
